# FASCICULE DE BREVET EUROPEEN

(11) **EP 0 511 122 B1**
(45) Date de publication et mention de la délivrance du brevet: **18.10.1995**
(21) Numéro de dépôt: 92420108.0
(22) Date de dépôt: 07.04.1992
(51) Int. Cl.: G01B 11/30, G01D 5/26

(54) **Capteur optique apte à fournir une information représentative de l'état d'une surface**
Optischer Fühler mit der Fähigkeit zum Liefern einer Information, die dem Oberflächenzustand entspricht
Optical transducer suitable to provide information representative of the state of a surface

(30) Priorité: 22.04.1991 FR 9105036
(43) Date de publication de la demande: 28.10.1992
(73) Titulaire: SCHNEIDER ELECTRIC SA, 92100 Boulogne Billancourt (FR)
(72) Inventeur: Clauss, Gilles, F-38050 Grenoble Cedex 9 (FR); Chartier, Germain, F-38050 Grenoble Cedex 9 (FR); Benech, Pierre, F-38050 Grenoble Cedex 9 (FR); Persegol, Dominique, F-38050 Grenoble Cedex 9 (FR)
(74) Mandataire: Jouvray, Marie-Andrée

(56) Documents cités:
- EP-A- 0 224 901
- CH-A- 490 682
- DD-A- 252 236
- GB-A- 2 083 217
- US-A- 4 958 932

## Description

La présente invention se rapporte à un capteur optique destiné à fournir une information, visuelle ou non, représentative de l'état existant sur au moins une portion définie de la surface d'un objet.

Pour surveiller l'état en surface d'un objet, par exemple pour contrôler l'état de surface d'un tuyau fabriqué et défilant en continu, il est actuellement nécessaire de positionner autour du tuyau un nombre de caméras optiques suffisant pour pouvoir couvrir toute la section circulaire. Au minimum, il convient de prévoir trois caméras optiques placées à 120 degrés l'une par rapport à l'autre, mais le nombre peut être supérieur à trois si une très bonne définition est exigée. Dans le dernier cas, il convient en outre d'utiliser des caméras de grande précision, comportant un système de lentilles extrêmement soigné et sophistiqué. Si les dispositifs connus procurent des résultats techniques satisfaisants, ils ont pour inconvénients d'être extrêmement lourds, complexes, et donc onéreux, et d'être souvent exagérement encombrants.

Les inconvénients existent pour la plupart des dispositifs, industriels ou non, qui font appel à la représentation optique de l'état existant en un endroit déterminé de la surface d'un objet. Par exemple, pour aligner, en vue de la fabrication de circuits intégrés à semi-conducteurs, un grand masque de microélectronique avec la couche qu'il doit recouvrir avec très grande précision, on peut utiliser, quatre caméras optiques de haute définition, ce qui est bien entendu là aussi très lourd en prix de revient et encombrement.

L'invention vise à remédier à ces inconvénients.

Le document DD-A-252.236 décrit un dispositif permettant de délivrer une information représentative des aspérités présentes en un point de la surface d'un objet, à partir de la mesure de la lumière diffusée par ce point. Des fibres optiques, dont les extrémités d'entrée forment un arc dont le centre correspond au point à examiner, transportent cette lumière vers un réseau de phototransistors de manière à fournir une mesure de la répartition angulaire de la lumière diffusée.

Le capteur selon l'invention est conforme à la revendication 1.

L'invention sera mieux comprise, et ses avantages et autres caractéristiques ressortiront, lors de la description suivante de quelques exemples non limitatifs de réalisation et d'utilisation du capteur optique, en référence aux dessins schématiques annexés dans lesquels:
La figure 1 est un schéma synoptique d'une installation de surveillance optique de l'état de surface d'un tube défilant en continu, l'installation utilisant deux capteurs optiques conformes à l'invention;
La figure 2 montre une variante du capteur utilisé pour l'installation de la figure 1;
La figure 3 montre une application de l'invention à l'alignement de plaques, en particulier de masques pour la réalisation de circuits intégrés à semi-conducteurs;
La figure 4 illustre de la même façon l'application de l'invention pour le centrage d'une pièce cylindrique;
La figure 5 montre comment l'invention est applicable à l'examen optique de l'état de surface d'un perçage, cylindrique ou non; et
La figure 6 montre une application de l'invention à la surveillance de la fabrication de plaques dont la tranche a une forme tourmentée et prédéterminée.

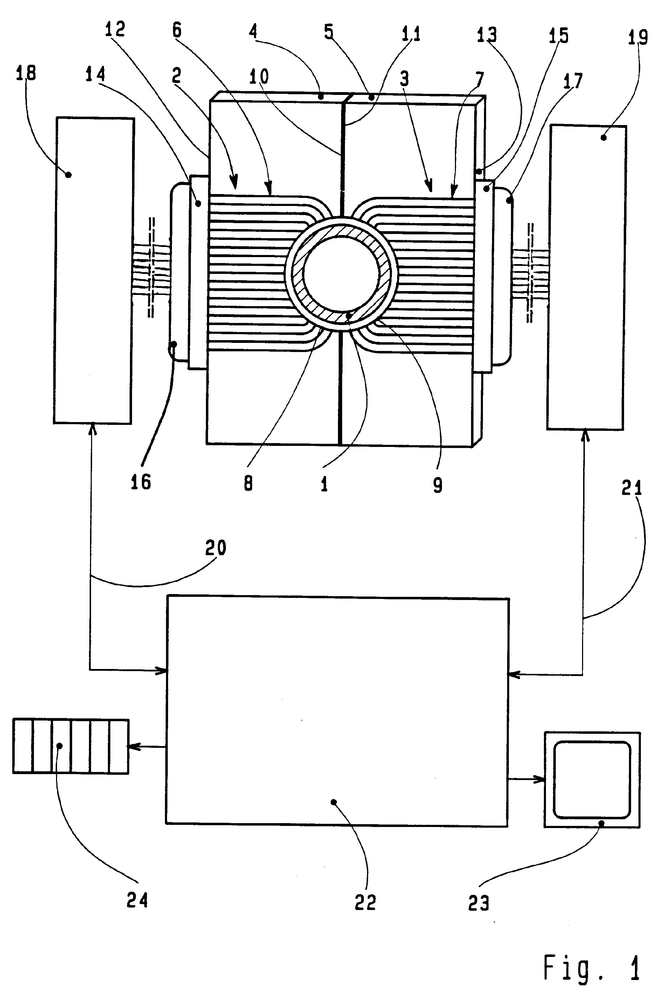

En se reportant à la figure 1, la référence 1 désigne un tube ou tuyau, vu en section transversale, qui est classiquement fabriqué en continu et dont on désire surveiller l'état de surface.

On utilise dans ce but deux têtes optiques accolées 2 et 3, qui sont chacune constituées d'un substrat formé, par exemple, par une plaque de verre, respectivement 4 et 5, à la surface de laquelle est réalisé, un faisceau de microguides lumineux, respectivement 6 et 7. Les microguides peuvent être réalisés par toute technologie d'optique intégrée appropriée, par exemple par échange d'ions, par dépôt de couches sur silicium, par dopage sur du niobate de lithium, par diffusion. A titre indicatif, l'épaisseur du substrat peut être de l'ordre du millimètre.

Chacun de ces faisceaux part d'une portion semi-circulaire 8,9 d'une première tranche 10,11 du substrat 4,5 correspondant, et il aboutit, sur la tranche opposée 12,13, sur une barrette de photodétecteurs classique, respectivement 14 et 15. Une telle barrette comporte un ensemble de photodétecteurs testés électroniquement par balayage ou par multiplexage. Selon un mode de réalisation préférentiel, on utilise des barrettes CCD, testées par balayage électronique. Une barrette CCD classique est constituée par une rangée de photodétecteurs de très petites dimensions. A titre d'exemple, chaque pixel peut correspondre à un photodétecteur de 10 micromètres par 10 micromètres.

Par construction des faisceaux 6,7 de microguides, chacun des microguides aboutit sur au moins un point photodétecteur associé de la barrette de photodétecteurs correspondante, ce qui est actuellement réalisable (avec précision) par des procédés de photolithographie, chaque barrette 14,15 étant fixée sur la tranche correspondante 12,13 du substrat 4,5 qui lui est associé.

Le tube 1 étant uniformément éclairé par un dispositif externe (classique non représenté), chaque microguide du faisceau 6,7 transmet aux points photodétecteurs de la barrette 14,15 qui lui sont associés un niveau d'intensité lumineuse qui est représentative de la réflectivité, et donc de l'état de surface et de la forme du petit élément du tube 1 qui se trouve en face de l'extrémité amont (située sur la portion semi-circulaire 8,9 précitée) de ce microguide.

A chaque barrette 14 et 15 est classiquement associée une broche de connexion électrique, respectivement 16 et 17, électriquement connectée à une carte électronique 18,19 de commande de balayage, d'alimentation, et de relevé et mise en forme des informations, la carte et la broche étant normalement fournies par le constructeur.

Les données que constituent ces informations sont transmises, par des liaisons bidirectionnelles 20 et 21, à un organe central de traitement 22, par exemple à microprocesseur, éventuellement relié à des moyens de visualisation, constitués par exemple par un écran 23, et/ou un afficheur alpha-numérique 24.

Les caractéristiques d'un tube standard en bon état ayant été préalablement enregistrées dans une mémoire du microprocesseur compris dans l'organe de traitement 22, tout défaut de surface du tube 1, qui défile en continu à travers le cercle 8,9 réalisé par l'aboutement des deux tranches 10,11 des substrats 4 et 5, sera détecté par le ou les microguides qui lui font face et pourra,par comparaison, être visualisé, au moins en position, sur les moyens de visualisation 23 et/ou 24.

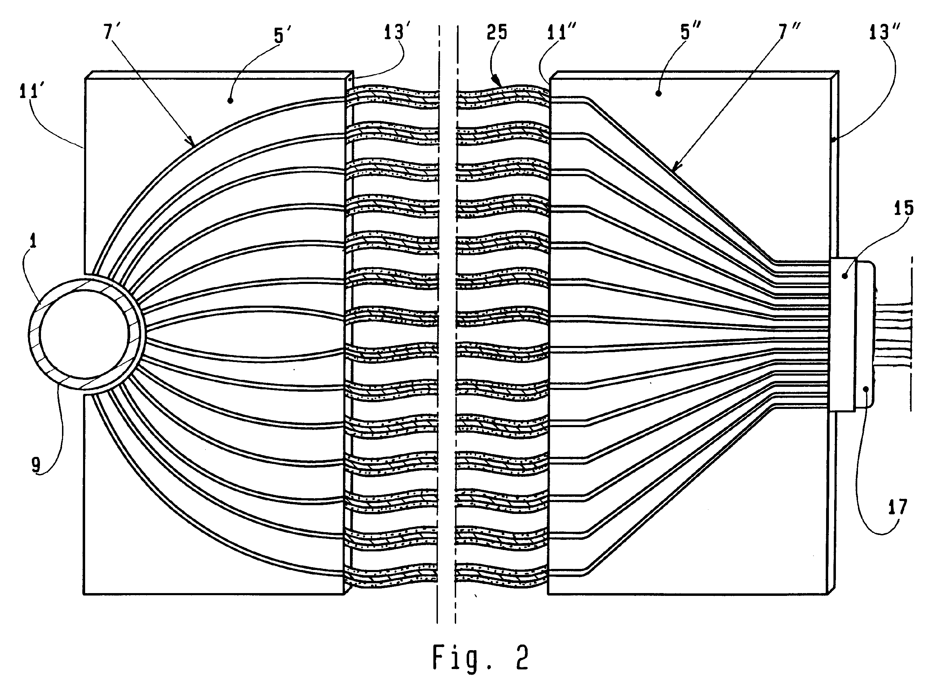

Dans l'exemple de réalisation qui vient d'être décrit, la barrette ainsi que sa broche et sa carte associées sont assez proches de la tête optique et de l'objet qu'elle surveille. Ceci peut être gênant dans certains cas, et à ce sujet la figure 2 montre une variante de réalisation dans laquelle la barrette de photodétecteurs est déportée par l'emploi d'une nappe de fibres optiques.

Comme on le voit sur la figure 2, chaque tête optique à microguides, telle que la tête 5 de la figure 1, est séparée en deux substrats 5′et 5˝, chacun porteur d'un faisceau de microguides, respectivement le faisceau 7′ et le faisceau 7˝ comportant chacun un même nombre n de microguides.

Ces deux substrats 5′et 5˝ sont reliés par n fibres optiques placées entre la tranche amont 13′ du substrat 5′ et la tranche amont 11˝ du substrat 5˝.

Comme on le voit sur le dessin, le faisceau 7′ relie les n points de captage lumineux situés sur le demi-cercle 9 aux extrémités amont des n fibres optiques 25 correspondantes, tandis que le faisceau 7˝ relie les extrémités aval de ces n fibres optiques 25 aux n photodétecteurs de la barrette de photodétecteurs 15. Les faisceaux 7′ et 7˝ ont une forme adaptée pour permettre leur connexion aux fibres optiques de liaison 25. En effet, le diamètre et l'écartement des fibres optiques est généralement très supérieur à l'écartement des microguides à leur liaison avec la barrette ou sur la tranche 9 de détection. Les faisceaux 7′ et 7˝ ont donc une forme divergente en direction des fibres optiques de liaison. On obtient finalement un résultat optique équivalent à celui du circuit selon la figure 1, avec report à distance de la partie traitement électronique constituée par la barrette de photodétecteurs et la carte électronique qui lui est associée.

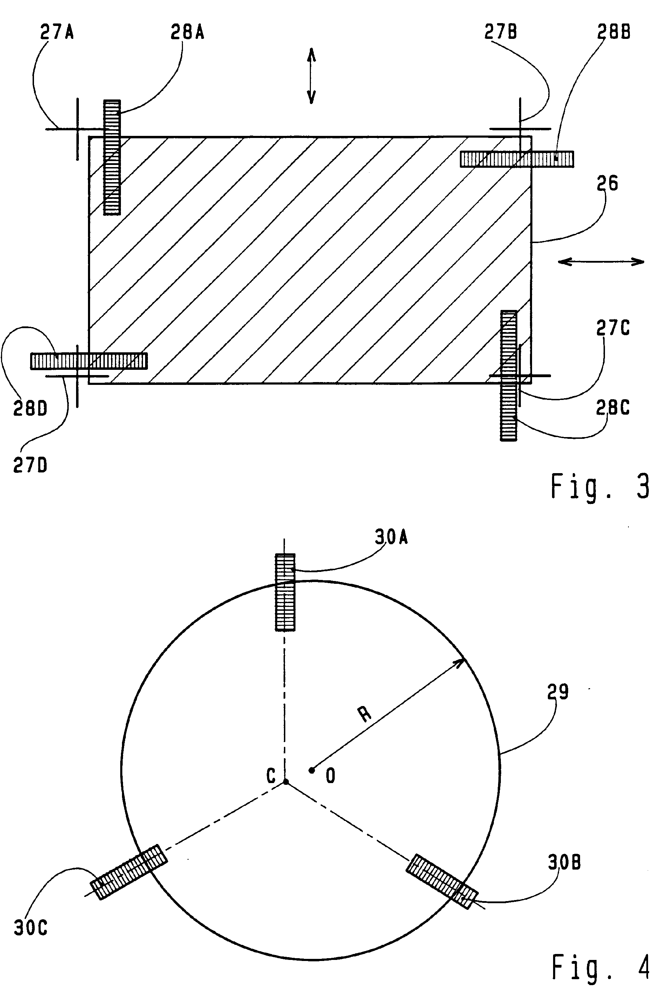

La figure 3 montre une application de l'invention au positionnement précis d'une plaque 26, pouvant être par exemple un masque de fabrication de circuit intégré, par rapport à un repère fixe constitué ici par quatre croix 27A à 27D.

On utilise, pour réaliser ce genre d'alignement, quatre têtes optiques linéaires à microguides 28A à 28D, toutes identiques, semblables à celles précédemment décrites, et bien entendu chacune associée à une barrette de photodétecteurs (non représentées).

Chacune de ces têtes optiques est positionnée de manière définie, et judicieusement choisie, par exemple tel que représenté au dessin, au dessus de la croix, respectivement 27A à 27D, qui lui correspond. Chacune de ces croix correspond donc, sur la tête optique qui lui est associée, à une graduation (donc à un microguide) bien déterminée de cette tête optique.

Comme chaque bord de la plaque 26 donne aussi, lorsque la plaque est glissée sous les têtes optiques 28A à 28D, une indication optique qui correspond à la graduation correspondante de chaque tête, on comprend aisément que la plaque sera correctement centrée lorsque les écarts entre les graduations relevées par les barrettes 28A, 28C et respectivement 28B,28D seront identiques. On obtient ainsi un alignement très précis et réalisé à moindre coût.

Ce même genre de dispositif est applicable, comme montré sur la figure 4, au centrage de l'axe O d'une pièce cylindrique 29, par exemple d'une pièce tubulaire, par rapport à un point déterminé C. On utilise alors trois têtes optiques linéaires 30A à 30C, à microguides, que l'on positionne comme représenté, par exemple à 120 degrés l'une de l'autre et toutes trois dirigées vers le point C, à une distance de celui-ci sensiblement égale au rayon R de la section droite de la pièce cylindrique circulaire 29 (supposée vue en bout sur le dessin). Le centrage sera alors acquis lorsque les graduations (données chacune par la tranche circulaire de la pièce 29) des trois têtes 30A à 30C seront égales.

A noter que le dispositif est d'une souplesse appréciable, puisqu'il est indépendant du rayon R de la pièce 29 à centrer: pour un rayon plus ou moins grand, il suffit de rapprocher ou d'éloigner les trois têtes optiques 30A à 30C.

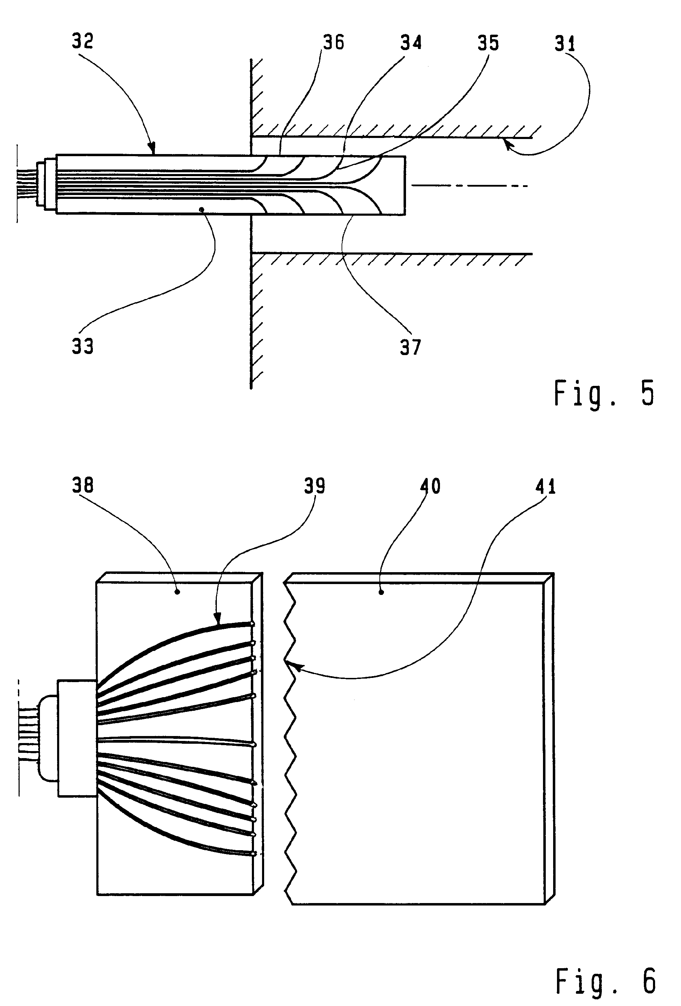

Une autre application de l'invention est schématisée sur la figure 5. Il s'agit alors d'inspecter l'état en surface d'un perçage 31, cylindrique ou non, borgne ou non. On utilise pour ceci une tête optique à microguides 32, toujours construite sur le même principe, mais dont le substrat de verre 33 a une forme plate et longiligne, de dimensions transversales inférieures à celles du trou 31. Les embouchures amont 34 des microguides 35 sont alors régulièrement réparties sur les deux bords latéraux 36,37 de la plaque de verre allongée 33.

Afin d'éclairer l'intérieur du trou 31, un microguide 35 sur deux peut être alimenté en intensité lumineuse d'éclairement, et n'est donc pas utilisé pour le captage optique (système non représenté sur la figure 5). A noter bien entendu que la disposition alternée "microguide d'éclairage - microguide de détection optique" du faisceau est aussi utilisable dans toutes les réalisations précédemment décrites. D'une manière générale, certains microguides du faisceau peuvent être affectés à l'éclairage de la surface à examiner, tandis que les autres sont affectés à la détection.

Enfin, la figure 6 montre l'utilisation d'une tête de capteur optique, comportant une plaque de verre sensiblement rectangulaire 38 avec faisceau de microguides 39, pour la surveillance du profil prédéfini 41 de la tranche d'une pièce de fabrication 40 en grande ou petite série. Dans ce cas, les informations transmises par les microguides sont comparées à des informations de référence, correspondant au profil, mises en mémoire dans l'organe central de traitement.

A noter que, pour l'exécution de certaines réalisations conformes à l'invention, il convient de découper et polir avec précision la tranche amont du substrat de verre qui contient les embouchures amont des microguides, c'est à dire les points de captage de la tête optique qui fait partie de la présente invention. Avantageusement, la découpe peut être effectuée par jet d'eau chargé de microparticules abrasives, par exemple de microparticules de diamant: on obtient ainsi une tranche nette, bien polie, et d'un profil précis, pouvant notamment être curviligne.

L'invention n'est nullement limitée aux exemples de réalisation qui viennent d'être décrits. Bien au contraire, d'autres variantes et formes d'exécution sont envisageables, dans le cadre d'applications semblables ou différentes. Il est, par exemple, possible de former des microguides sur les faces supérieure et inférieure du substrat d'une tête de captage, les microguides de l'une des faces étant affectés à l'éclairage de la surface à examiner et les microguides de l'autre face étant affectés à la détection.

## Revendications

1. Capteur optique comportant au moins une tête optique comportant des guides optiques ayant chacun une extrémité d'entrée et une extrémité de sortie, une barrette de photodétecteurs (14, 15), connectée aux extrémités de sortie des guides optiques, et un dispositif électronique de traitement (18 à 24) connecté à la barrette de photodétecteurs, capteur caractérisé en ce que les guides optiques sont des microguides (6, 7) réalisés dans un substrat (4, 5) par des techniques d'optique intégrée, une tranche (8, 9) du substrat qui porte les extrémités d'entrée des microguides ayant une forme en corrélation avec une portion prédéterminée de la surface d'un objet (1, 26, 29, 31, 41) à examiner, un point de ladite portion de surface étant associé à l'extrémité d'entrée de l'un des microguides, l'extrémité de sortie dudit microguide étant connectée à l'un des photodétecteurs de ladite barrette, de manière à ce que le dispositif électronique de traitement fournisse une information représentative de l'état existant sur une pluralité de points de ladite portion de surface.

2. Capteur optique selon la revendication 1, caractérisé en ce que la tête optique à microguides est scindée en deux parties (5′,5˝) éloignées l'une de l'autre et comportant chacune un faisceau (7′7˝) de microguides, deux faisceaux (7′,7˝) de microguides étant reliés entre eux par un nombre correspondant de fibres optiques (25), et ayant une forme adaptée pour pouvoir réaliser leur aboutement au faisceau de fibres optiques de liaison (25).

3. Capteur selon l'une des revendications 1 et 2, appliqué à l'alignement d'une plaque (26) par rapport à des repères fixes (27A à 27D), caractérisé en ce qu'il comporte au moins une tête optique à microguides (28A à 28D), associée à chaque repère (27A à 27D) et apte à fournir une première indication fixe relative à la position du repère et une autre indication variable et relative à la position du bord correspondant de la plaque (26).

4. Capteur selon l'une des revendications 1 et 2, appliqué au centrage d'une pièce (29), caractérisé en ce qu'il comporte plusieurs têtes optiques à microguides (30A à 30B) orientées vers le point de centrage désiré (C), et placées de manière à être à hauteur du bord de la pièce à centrer (29), de façon à fournir chacun une indication représentative de sa position par rapport au bord.

5. Capteur selon l'une des revendications 1 et 2, appliqué à l'examen de l'état en surface d'un perçage (31), caractérisé en ce que la tête optique à microguides (32) a une forme allongée lui permettant d'être introduite dans le perçage (31).

6. Capteur selon l'une quelconque des revendications 1 à 5, caractérisé en ce que certains microguides de la tête optique sont connectés à une source lumineuse de manière à éclairer une portion de la surface à examiner.

7. Capteur selon la revendication 6, caractérisé en ce qu'un microguide sur deux est connecté à ladite source lumineuse.

8. Capteur selon l'une quelconque des revendications 1 à 7, caractérisé en ce que le substrat de la tête optique à microguides est constitué par un substrat de verre, au moins partiellement découpée par jet d'eau chargé de microparticules abrasives.

## Patentansprüche

1. Optischer Meßaufnehmer, der mindestens einen Meßkopf mit, jeweils eine Eintritts- und eine Austrittsfläche aufweisenden Lichtleitern, eine an die Austrittsöffnungen der Lichtleiter angeschlossene Fotoempfängerleiste (14, 15) und eine an die Fotoempfängerleiste angeschlossene elektronische Signalverarbeitungsschaltung (18 bis 24) umfaßt, dadurch gekennzeichnet, daß die Lichtleiter als durch integrierte optische Verfahren in einen Trägerkörper (4, 5) eingebrachte Mikrolichtleiter (6, 7) ausgeführt sind, wobei eine die Eintrittsöffnungen der Mikrolichtleiter tragende Randfläche (8, 9) des Trägerkörpers eine an einen bestimmten Abschnitt der Oberfläche eines Prüflings (1, 26, 29, 31, 41) angepaßte Form aufweist, ein Punkt des genannten Oberflächenabschnitts der Eintrittsöffnung einem der Mikrolichtleiter zugeordnet ist und die Ausgangsöffnung des genannten Mikrolichtleiters an einen der Fotoempfänger der genannten Leiste angeschlossen ist, so daß die elektronische Signalverarbeitungsschaltung ein Signal bereitstellt, welches die Beschaffenheit mehrerer Punkte des genannten Oberflächenabschnitts abbildet.

2. Optischer Meßaufnehmer nach Anspruch 1, dadurch gekennzeichnet, daß der optische Meßkopf mit den Mikrolichtleitern in zwei voneinander getrennte Teile (5′, 5˝) aufgeteilt ist, die jeweils ein Mikrolichtleiterbündel (7′, 7˝) aufweisen, wobei die beiden Mikrolichtleiterbündel (7′, 7˝) über eine entsprechende Anzahl von Lichtleitfasern (25) miteinander verbunden sind und eine für den Anschluß an das jeweilige Verbindungs-Lichtleitfaserbündel (25) geeignete Form aufweisen.

3. Meßaufnehmer nach Anspruch 1 oder 2 für die Ausrichtung einer Platte (26) in bezug auf feste Referenzpunkte (27A bis 27D), dadurch gekennzeichnet, daß er mindestens einen, jedem Referenzpunkt (27A bis 27D) zugeordneten optischen Meßkopf (28A bis 28D) mit Mikrolichtleitern umfaßt, der in der Lage ist, einen ersten festen Meßwert bezüglich der Position des Referenzpunktes und einen zweiten variablen Meßwert bezüglich der Position des entsprechenden Rands jeder Platte (26) bereitzustellen.

4. Meßaufnehmer nach Anspruch 1 oder 2 für die Zentrierung eines Bauteils (29), dadurch gekennzeichnet, daß er mehrere, in bezug auf den gewünschten Referenzmittelpunkt (C) ausgerichtete und in der Höhe des Rands des zu zentrierenden Teils angeordnete optische Meßköpfe (30A bis 30C) mit Mikrolichtleitern umfaßt, so daß jeder Meßkopf einen Meßwert liefert, der seine Position in bezug auf den Rand abbildet.

5. Meßaufnehmer nach Anspruch 1 oder 2 für die Überprüfung der Oberflächenbeschaffenheit einer Bohrung (31), dadurch gekennzeichnet, daß der optische Meßkopf (32) mit Mikrolichtleitern eine längliche Form aufweist, die es ermöglicht, ihn in die Bohrung (31) einzuführen.

6. Meßaufnehmer nach irgendeinem der Ansprüche 1 bis 5, dadurch gekennzeichnet, daß bestimmte Mikrolichtleiter des optischen Meßkopfs mit einer Lichtquelle verbunden sind, so daß ein Teil der zu überprüfenden Oberfläche beleuchtet wird.

7. Meßaufnehmer nach Anspruch 6, dadurch gekennzeichnet, daß jeder zweite Mikrolichtleiter an die genannte Lichtquelle angeschlossen ist.

8. Meßaufnehmer nach irgendeinem der Ansprüche 1 bis 7, dadurch gekennzeichnet, daß der Trägerkörper des optischen Meßkopfs mit Mikrolichtleitern aus einem Glaskörper besteht, der zumindest teilweise mit Hilfe eines, einen Abrasivstoff mit mikrofeinen Teilchen enthaltenden Wasserstrahls beschnitten ist.

## Claims

1. An optic sensor comprising at least one optic head comprising optic guides each having an input end and an output end, a photodetector line array (14, 15) connected to the output ends of the optic guides, and an electronic processing unit (18 to 24) connected to the photodetector line array, a sensor characterized in that the optic guides are microguides (6, 7) achieved in a substrate (4, 5) by integrated optic techniques, an edge (8, 9) of the substrate which bears the input ends of the microguides having a shape in correlation with a predetermined portion of the surface of an object (1, 26, 29, 31, 41) to be examined, a point of said portion of surface being associated to the input end of one of the microguides, the output end of said microguide being connected to one of the photodetectors of said line array, so that the electronic processing unit supplies information representative of the state existing on a plurality of points of said portion of surface.

2. The optic sensor according to claim 1, characterized in that the optic head with microguides is split into two parts (5′,5˝) located away from one another and each comprising a bundle (7′,7˝) of microguides, two bundles (7′,7˝) of microguides being connected together by a corresponding number of optic fibres (25), and having a suitable shape to be able to achieve their abutment to the bundle of connecting optic fibres (25).

3. The sensor according to one of the claims 1 or 2, applied to alignment of a plate (26) with respect to fixed guide marks (27A to 27D), characterized in that it comprises at least one optic head with microguides (28A to 28D), associated with each guide mark (27A to 27D) and able to supply a first fixed indication relative to the position of the guide mark and another variable indication relative to the position of the corresponding edge of the plate (26).

4. The sensor according to one of the claims 1 or 2, applied to centring of a part (29), characterized in that it comprises several optic heads with microguides (30A to 30B) directed towards the required centring point (C), and placed in such a way as to be at the height of the edge of the part to be centred (29), so as to each provide an indication representative of its position with respect to the edge.

5. The sensor according to one of the claims 1 or 2, applied to examination of the surface state of a drilled hole (31), characterized in that the optic head with microguides (32) has an elongated shape enabling it to be inserted in the drilled hole (31).

6. The sensor according to any one of the claims 1 to 5, characterized in that certain microguides of the optic head are connected to a light source so as to illuminate a portion of the surface to be examined.

7. The sensor according to claim 6, characterized in that one microguide out of two is connected to said light source.

8. The sensor according to any one of the claims 1 to 7, characterized in that the substrate of the optic head with microguides is formed by a glass substrate, at least partly cut by a water jet charged with abrasive microparticles.
